**Europäisches Patentamt**

**European Patent Office**

**Office européen des brevets**

(11) Veröffentlichungsnummer: **0 038 871**
A2

(12) **EUROPÄISCHE PATENTANMELDUNG**

(21) Anmeldenummer: **80105955.1**

(22) Anmeldetag: **02.10.80**

(51) Int. Cl.³: **B 65 G 47/88**
**B 65 G 13/075**

(30) Priorität: 26.04.80 DE 3016153

(43) Veröffentlichungstag der Anmeldung:
04.11.81 Patentblatt 81/44

(84) Benannte Vertragsstaaten:
DE FR GB IT NL SE

(71) Anmelder: Johann A. Krause Maschinenfabrik
Betonstrasse 31
D-2820 Bremen-Farge(DE)

(72) Erfinder: Simonis, Gerhard
Eschenweg 12
D-2874 Lemwerder(DE)

(74) Vertreter: Bolte, Erich, Dipl.-Ing. et al,
Hollerallee 73
D-2800 Bremen(DE)

(54) Förderbahn, insbesondere Friktionsrollenbahn.

(57) Friktionsrollenbahnen dienen zum Transport von Werkstückträgern od. dgl. Für die Durchführung von Bearbeitungen an den auf diesen Werkstückträgern angeordneten Werkstücken oder aus anderen Gründen ist es erforderlich, die Werkstückträger an vorgegebenen Positionen anzuhalten. Zu diesem Zweck sind bewegbare Stoppeinrichtungen unterhalb der Friktionsrollenbahn angeordnet, die mit Anschlägen in die Bewegungsbahn des Werkstückträgers gefahren werden. Zur Vermeidung von Rückprallbewegungen ist die Stoppeinrichtung mit einem Gegenstopper ausgerüstet, so daß der Werkstückträger gegenüber Bewegungen in beiden Richtungen gesichert wird.

Fig. 4

MEISSNER & BOLTE

BREMEN

PATENTANWÄLTE
DIPL.-ING. HANS MEISSNER
DIPL.-ING. ERICH BOLTE

- 1 -

**0038871**

Anmelder:

Johann A. Krause
Maschinenfabrik
Betonstraße 31
2800 Bremen

D 2800 BREMEN 1.
Slevogtstraße 21
Bundesrepublik Deutschland

Telefon 0421-34 20 19
Telegramme: PATMEIS BREMEN
Telex: 24 6157 (meibo d)

Datum 27. August 1980

Unser Zeichen          9112

Ihr Zeichen

Förderbahn, insbesondere Friktionsrollenbahn.

Beschreibung

Die Erfindung betrifft eine Förderbahn, insbesondere Friktionsrollenbahn, für den Transport von Gegenständen, z. B. Werkstückträgern, mit einer oder mehreren Stoppeinrichtungen zum Anhalten der Werkstückträger od. dgl. durch eine in die Förderbahn derselben bewegbare, elastische Stoppklinke.

Die hier in erster Linie angesprochenen Friktionsrollenbahnen werden vornehmlich in Fertigungsbetrieben zum Transport von einzelnen Gegenständen, nämlich Werkstückträgern mit darauf angeordneten Werkstücken eingesetzt. Bei den vorgenannten Werkstücken kann es sich beispielsweise um Motoren, Teile derselben, Getriebe, Achsen etc. handeln. Der Transport dieser Gegenstände auf den umfänglichen und verzweigten Friktionsrollen einer Fertigungsanlage muß häufig aus verschiedenen Gründen individuell für einzelne Werkstückträger unterbrochen werden, insbesondere zur Durchführung von Bearbeitungen an den Werkstücken während der Stillstandsphase, aber auch zum Abheben der Werkstücke bzw. Werkstückträger. Zu diesem Zweck sind die Friktionsrollenbahnen bekannterweise mit ortsfesten Stoppeinrichtungen ausgerüstet, die aus von unten her in die Bewegungsbahn der Werkstückträger hebbaren Stoppklinken bestehen. Die Betätigung derartiger Stoppklinken erfolgt bisher durch Druckmittelzylinder oder gegebenenfalls von Hand. Die von dem Werkstückträger beaufschlagte Fläche der Stoppklinke ist üblicherweise mit einem elastischen Polster versehen, um ein elastisches Abfangen der mit verhältnismäßig hoher Bewegungsenergie auftreffenden Werkstückträger zu erreichen.

Der Erfindung liegt die Aufgabe zugrunde, Stoppeinrichtungen für Friktionsrollenbahnen und andere Förderbahnen weiterzuentwickeln und zu verbessern. Insbesondere ist es Ziel der Erfindung, die Stoppeinrichtung im Aufbau einfacher, in der Arbeitsweise zuverlässiger und gegenüber den äußeren Beanspruchungen während des Betriebes sicherer zu machen. Weiterhin geht es bei der Erfindung darum, die kinetischen Eigenschaften derartiger Stoppeinrichtungen beim Abfangen der verhältnismässig großen Massen zu verbessern.

Zur Lösung der vorstehenden Aufgabe ist die erfindungsgemäße Förderbahn bzw. deren Stoppeinrichtung durch eine Stoppklinke und einen Gegenstopper zum Arretieren des Werkstückträgers nach Auftreffen desselben auf die Stoppklinke gegen Rückbewegungen gekennzeichnet.

Die Erfindung geht aus von der Erkenntnis, daß der auf die elastische Stoppklinke auftreffende Werkstückträger federnd entgegen der Transportrichtung zurückbewegt wird. Diese Erscheinung steht der Forderung nach exakter Positionierung des Werkstückträgers entgegen. Der erfindungsgemäße Gegenstopper, der unmittelbar nach Auftreffen des Werkstückträgers auf die Stoppklinke zur Wirkung kommt, wird eine Rückbewegung des Werkstückträgers in technisch beachtlichem Umfange vermeiden.

Der Gegenstopper ist nach einem weiteren Vorschlag der Erfindung als klinkenartige, lediglich einseitig wirkende Raste ausgebildet, die in die Bewegungsbahn des Werkstückträgers oder eines an diesem angeordneten Anschlags ragt. Nach Überfahren der mit einer schrägen Überlauffläche ausgebildeten Raste durch den Werkstückträger bzw. den Anschlag desselben wird eine Rückwärtsbewegung durch eine in die Bewegungsbahn ragende Anschlagfläche vermieden.

Von besonderer Bedeutung ist weiterhin die konstruktive Ausgestaltung bzw. Lagerung der Stoppklinke und/oder des Gegenstoppers. Die Stoppklinke ist erfindungsgemäß gegen ein elastisches Gegendruckorgan bewegbar, z. B. gegen eine Feder oder gegen einen elastischen Lagerblock. Die in die Stoppklinke eingeleitete Bewegungsenergie des Werkstückträgers wird demnach nicht unmittelbar im Auftreffbereich der Stoppklinke aufgefangen, sondern umgeleitet auf den durch die bewegbare Stoppklinke beaufschlagten elastischen Druckblock. Dieser kann alternativ als mechanische oder pneumatische Feder ausgebildet sein. Die Stoppklinke ist dabei vorzugsweise als zweiarmiger Hebel ausgebildet. Ein aufwärtsgerichteter Hebelarm wird dabei durch den Werkstückträger bzw. durch den Anschlag desselben getroffen, während der andere Hebelarm durch Schwenkbewegung gegen den elastischen Druckblock bewegt wird.

- 4 -

In entsprechender Weise kann der Gegenstopper als zweiarmige Klinke ausgebildet und gelagert sein.

Die Stoppklinke ist nach einem weiteren Vorschlag der Erfindung durch einen E-Motor auf- und abbewegbar, nämlich in die Stoppposition und aus dieser zurück. Der E-Motor treibt einen Exzentertrieb, der in eine Ausnehmung eines die Stoppklinke tragenden, auf- und abbewegbaren Hubbolzens eintritt, an. Durch diesen Antrieb wird eine wenig störanfällige, sehr kompakte, nämlich insbesondere eine geringe Konstruktionshöhe aufweisende Einheit geschaffen, die ohne Störungen auch Dauerbetrieb ausgesetzt sein kann.

Weitere Merkmale der Erfindung befassen sich mit der Ausgestaltung und Anordnung der Stoppeinrichtung.

Ausführungsbeispiele der erfindungsgemäßen Stoppeinrichtung werden nachfolgend anhand von Zeichnungen näher erläutert.

Es zeigen:

Fig. 1:    eine Stoppeinrichtung in Seitenansicht der Förderbahn (Friktionsrollenbahn) gesehen, teilweise im Vertikalschnitt,

Fig. 2:    eine Queransicht der Stoppeinrichtung gemäß Fig. 1,

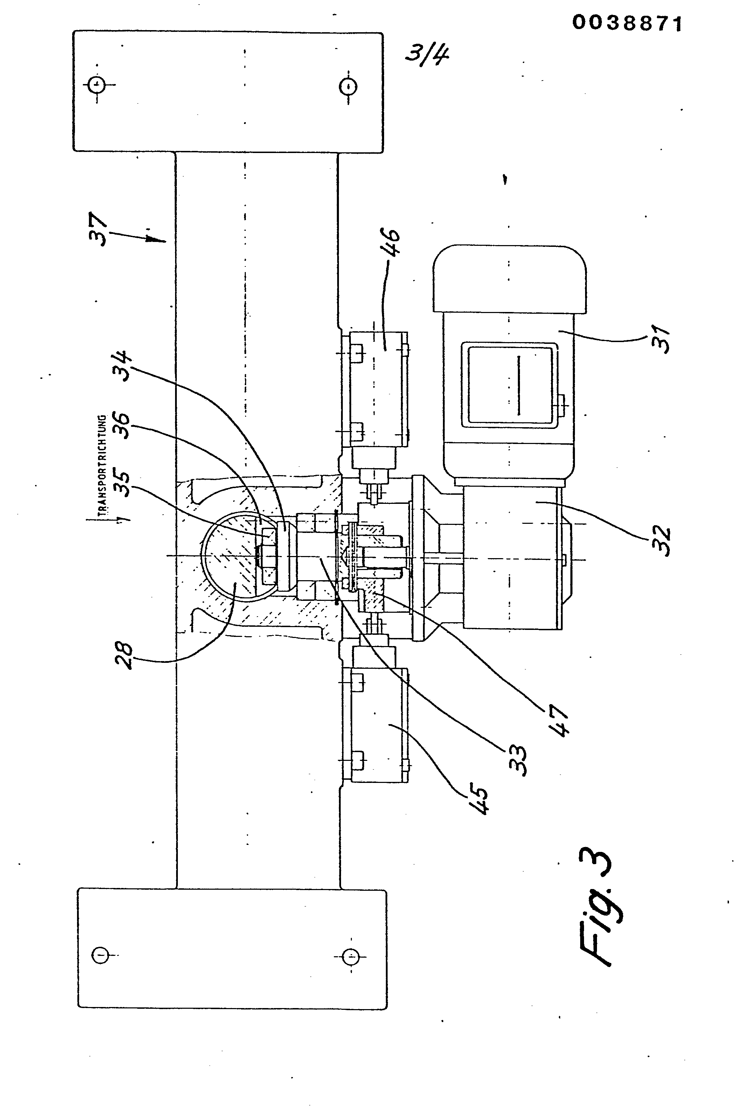

Fig. 3:    eine Grundrißdarstellung der Stoppeinrichtung gemäß Fig. 1 und 2, teilweise als Horizontalschnitt,

Fig. 4:    eine Ausführung der Stoppeinrichtung mit Gegenstopper in Seitenansicht bzw. im Vertikalschnitt bei gegenüber Fig. 1 vergrößertem Maßstab.

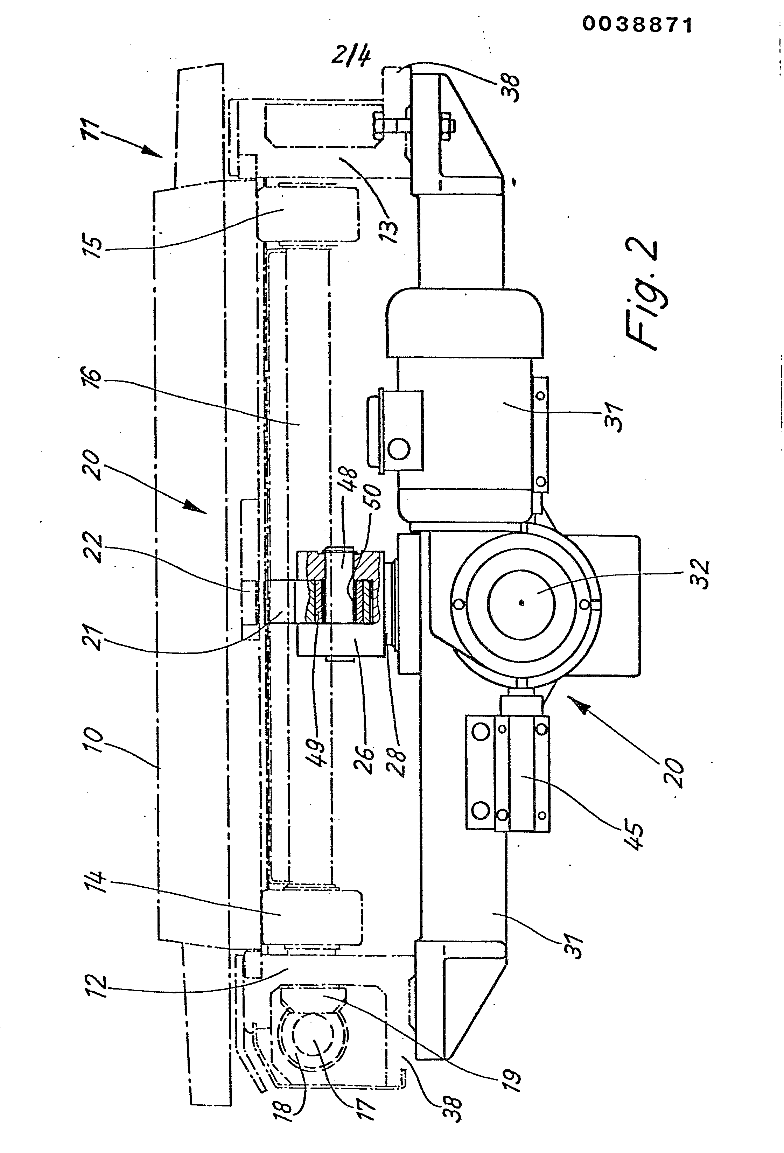

Die in den Zeichnungen dargestellten Ausführungsbeispiele von Stoppeinrichtungen für transportierte Gegenstände, insbesondere Werkstückträger 10, können vorzugsweise bei Friktionsrollenbahnen 11 zum Einsatz kommen. Bei derartigen Förderbahnen sind zwischen in Längsrichtung verlaufenden Schienen 12 und 13 Friktionsrollen 14 und 15 im seitlichen Bereich auf Wellenzapfen bzw. - wie bei dem in Fig. 2 gezeigten Ausführungsbeispiel - auf durchgehenden Friktionswellen 16 gelagert. Die Friktionswellen 16 sind angetrieben. Die Drehbewegung wird von einer auf der Außenseite der Schiene 12 gelagerten durchgehenden Antriebswelle 17 über Kegelräder 18 und 19 übertragen. Dieser Aufbau der Friktionsrollenbahn 11 entspricht im wesentlichen dem der DE-PS 25 02 557. Alternativ kann der Antrieb der Friktionsrollen 14, 15 auch durch andere Maßnahmen erzielt werden.

Die Werkstückträger 10 liegen auf den seitlichen Friktionsrollen 14, 15 auf und werden durch diese weitergefördert. An erforderlichen Positionen ist die Friktionsrollenbahn 11 mit einer ortsfesten Stoppeinrichtung 20 zum - zeitweiligen - Anhalten des Werkstückträgers 10 versehen. Die Stoppeinrichtung 20 ist mit einem von unten her in die Bewegungsbahn des Werkstückträgers 10 fahrbaren Stopporgan - im vorliegenden Fall mit einer Stoppklinke 21 - ausgerüstet, gegen die der Werkstückträger 10 bzw. ein an der Unterseite desselben angeordneter Anschlag 22 läuft. Stoppklinke 21 und entsprechend der Anschlag 22 sind annähernd in der Längsmittelebene der Friktionsrollenbahn 11 angeordnet.

Die Stoppklinke 21 ist in besonderer Weise ausgebildet, wie z.B.

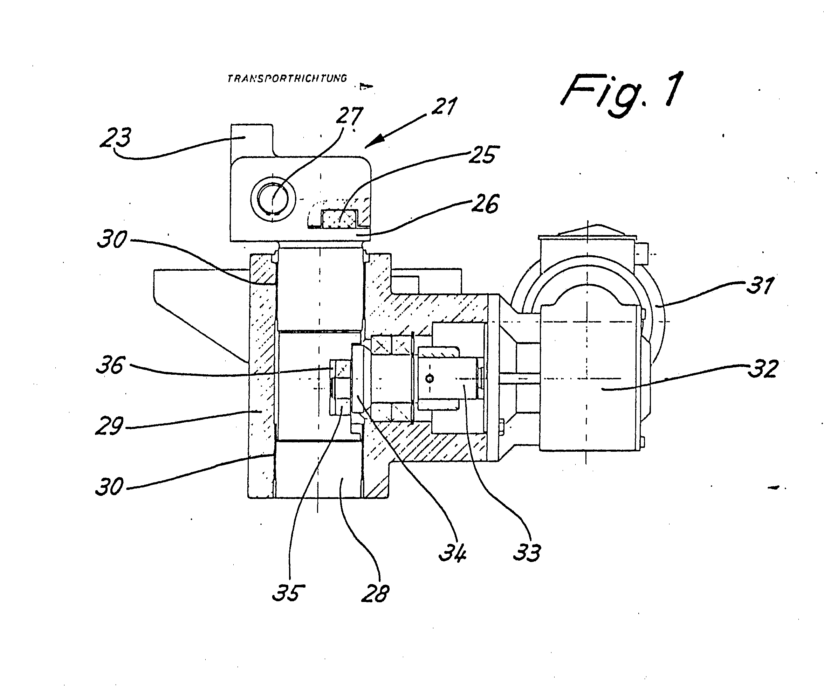

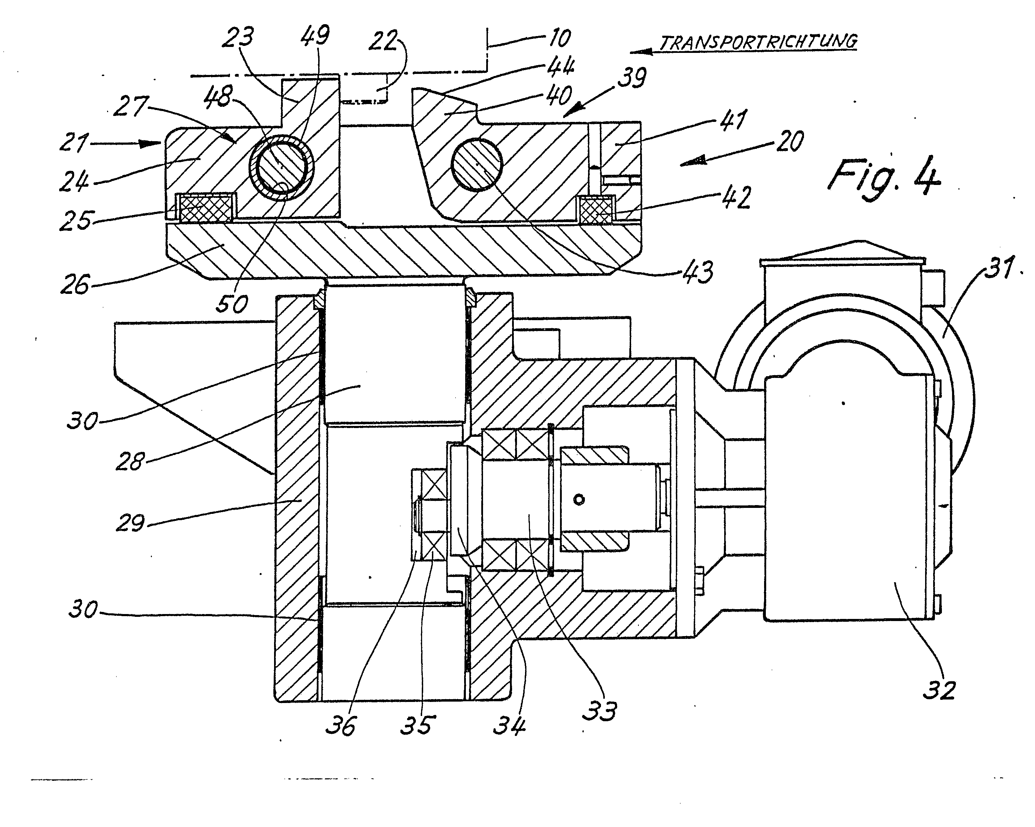

aus Fig. 1 und 4 ersichtlich. Sie wirkt hier als zweiarmiger, abgewinkelter Hebel. Ein im wesentlichen aufwärtsgerichteter Schenkel 23 wird in der Stopposition der Einrichtung durch den Werkstückträger 10 bzw. den Anschlag 22 beaufschlagt. Der andere, horizontale Schenkel 24 leitet die Raktionskräfte gegen ein Gegendruckorgan, welches energieabsorbierend und dämpfend ausgebildet ist. Beim vorliegenden Ausführungsbeispiel handelt es sich dabei um einen Druckblock 25 aus elastisch: verformbarem Werkstoff. Dieser ist auf einer Stützfläche angeordnet, nämlich auf dem Stegbereich eines im Querschnitt U-förmigen Trägers 26 für die Stoppklinke 21. Diese ist an den aufrechten Schenkeln des Trägers 26 durch ein Schwenklager 27 - bestehend aus einem quer durchgehenden Bolzen - gelagert und gehalten.

Die Stoppklinke 21 ist mit ihrem Träger 26 auf- und abbewegbar, nämlich in die Stopposition und aus dieser heraus. Zu diesem Zweck ist der Träger 26 auf dem oberen Ende eines aufrechten Hubbolzens 28 befestigt. Dieser wird in einer ortsfesten Führung in Gestalt einer Traghülse 29 gehalten. Gleitlager 30 gewährleisten die Auf- und Abbewegung des Hubbolzens 28 in der Traghülse 29.

Die vorstehende Bewegung wird durch einen E-Motor 31 bewirkt, der über ein Getriebe 32 ein Wellenstück 33 rotierend antreibt. Auf dem quer zum Hubbolzen 28 gerichteten Wellenstück 33 ist ein Exzenter angeordnet, nämlich eine mitumlaufende Scheibe 34, auf der außermittig eine Exzenterrolle 35 sitzt. Letztere ragt in eine Ausnehmung 36 des Hubbolzens 28. Die vorgenannte Ausnehmung 36 entspricht in ihrer Höhenabmessung der entsprechenden Abmessung der Exzenterrolle 35, so daß die auf- und abwärtsgerichtete Bewegungskomponente der mit der Scheibe 34 umlaufenden Exzenterrolle 35 eine entsprechende Bewegung des Hubbolzens 28 auslöst. In Querrichtung ist die Ausnehmung 36 schlitzartig ausgebildet, so daß die seitwärtsgerichteten Bewegungen der Exzenter.rolle 35 in dieser Ausnehmung 36 ausgeführt werden können.

Die vorliegende Stoppeinrichtung ist, wie insbesondere aus Fig. 2 ersichtlich, als einheitliches Aggregat an der erforderlichen Position unterhalb der Friktionsrollenbahn 11 angeordnet, nämlich hängend an dieser befestigt. Zu diesem Zweck erstreckt sich eine Traverse 37 quer unterhalb der Friktionsrollenbahn 11 von einer Schiene 12 zur anderen Schiene 13. Die Enden der Traverse 37 sind lösbar, nämlich z. B. durch Schrauben, mit den Schienen 12, 13, nämlich deren unterem Flansch 38, verbunden.

Etwa im Bereich der Längsmittelebene der Friktionsrollenbahn 11 ist an der Traverse 37 die gesamte Stoppeinrichtung, also einschließlich der Antriebseinheit mit E-Motor 31, Getriebe 32 etc. angebracht, derart, daß in der angehobenen Stopposition die Stoppklinke 21 mindestens mit dem oberen Teil des Schenkels 23 in die Bewegungsbahn des Werkstückträgers 10 bzw. des Anschlags 22 ragt.

Die Stoppeinrichtung 20 ist vorteilhafterweise mit einer weiteren Besonderheit ausgerüstet, nämlich einer Sicherung gegen unerwünschte Rückbewegungen des Werkstückträgers 10 nach Auftreffen auf die Stoppklinke 21. Zu diesem Zweck ist ein Gegenstopper 39 vorgesehen, der mindestens teilweise in die Bewegungsbahn des Werkstückträgers 10 bzw. des Anschlags 22 ragt. Ein Überfahren dieses Gegenstoppers 39 durch den Werkstückträger 10 bzw. Anschlag 22 ist möglich. Wenn nach Auftreffen auf die Stoppklinke 21 eine Rückbewegung erfolgt, erhält jedoch der Werkstückträger 10 bzw. der Anschlag 22 Anlage am Gegenstopper 39.

Bei dem dargestellten Ausführungsbeispiel ist der Gegenstopper 39 - entsprechend der Stoppklinke 21 - als zweiarmiger Hebel ausgebildet mit einem im wesentlichen aufwärtsgerichteten Stoppschenkel 40 und einem horizontalweisenden Druckschenkel 41. Letzterer wird - ebenfalls entsprechend der Stoppklinke 21 - gegen einen Druckblock 42 aus elastischem Werkstoff zur Vernichtung der kinetischen Energie gedrückt. Beide Druckblöcke 25 und 42 sind jeweils in Ausnehmungen der zuge-ordneten Stoppklinke 21 bzw. des Gegenstoppers 39 gelagert.

Der Gegenstopper 39 ist hier auf dem mit der Stoppklinke 21 gemeinsamen Träger 26, nämlich auf dem horizontalgerichteten Steg desselben gelagert. Ein quergerichteter Bolzen bildet ein Schwenklager 43 für den Gegenstopper 39.

Der Stoppschenkel 40 ist mit einer schrägen Überlauffläche 44 ausgebildet. Diese ermöglicht ein Überfahren des in die Bewegungsbahn des Werkstückträgers 10 bzw. des Anschlags 22 ra-genden Stoppschenkels 40 unter Verschwenken des Gegenstoppers 39 in Transportrichtung. Bei gegenläufiger Bewegung des Werk-stückträgers 10 kommt jedoch die Arretierfunktion des Gegenstoppers 39 zur Wirkung.

Stoppklinke 21 und Gegenstopper 39 bzw. der Schenkel 23 und der Stoppschenkel 40 sind in geringem Abstand voneinander angeordnet, der etwas größer ist als die Abmessung des Anschlags 22 in Transportrichtung. Es können dadurch geringfügige Rückbewegungen des Werkstückträgers 10 bis zum vollständigen Anhalten desselben erfolgen.

Der Gegenstopper 39 kann auch in anderer Weise ausgebildet sein als hier dargestellt. Des weiteren kann dieser Gegenstopper 39 in Verbindung mit einer in anderer Weise ausgebildeten Stoppklinke 21 bzw. Hubeinrichtung hierfür zum Einsatz kommen.

Der E-Motor 31 kann als reversibler Motor ausgebildet sein. Es ist aber auch möglich, den E-Motor 31 in einer Drehrichtung umlaufen zu lassen. Antrieb und Stillstand werden hier durch Schalter 45 und 46 bewirkt, gegen die ein auf dem Wellenstück 33 angeordneter Vorsprung 47 läuft.

Eine weitere individuelle Besonderheit der Erfindung ist in Fig. 2 und 4 erkennbar. Um die dämpfende Wirkung der Stoppklinke 21 zu verbessern, ist dieses schwenkbare Element durch ein elastisches, dämpfend ausgebildetes Schwenklager 27 abgestützt. Die Stoppklinke 21 ist zu diesem Zweck mit einer Lagerbuchse 49 auf dem quergerichteten, feststehenden Tragbolzen 48 abgestützt. Die Ausführung ist im vorliegenden Falle derart getroffen, daß die beispielsweise aus Gummi oder einem anderen elastischen Werkstoff bestehende Lagerbuchse 49 an der Stoppklinke 21 angebracht und über ein Gleitlager, z. B. einer Gleitbuchse 50, auf dem Tragbolzen 48 gelagert ist.

Das in vorstehender Weise ausgebildete elastische Schwenklager 27 nimmt eine der beim Auftreffen eines Werkstückträgers 10 auf die Stoppklinke 21 wirksam werdenden Kraftkomponenten auf und trägt dabei zur Dämpfung bei.

In gleicher oder entsprechender Weise kann der Gegenstopper 39 gelagert sein, sofern die Stoppeinrichtung 20
mit einem Gegenstopper ausgerüstet ist.

# MEISSNER & BOLTE

### BREMEN

PATENTANWÄLTE
DIPL.-ING. HANS MEISSNER
DIPL.-ING. ERICH BOLTE

0038871

- 1 -

**Anmelder:**

Johann A. Krause
Maschinenfabrik
Betonstraße 31
2800 Bremen

D 2800 BREMEN 1.
Slevogtstraße 21
Bundesrepublik Deutschland

Telefon 0421-34 20 19
Telegramme: PATMEIS BREMEN
Telex: 24 6157 (meibo d)

Datum 27. August 1980

Unser Zeichen 9112

Ihr Zeichen

Förderbahn, insbesondere Friktionsrollenbahn.

## Ansprüche

1.    Förderbahn, insbesondere Friktionsrollenbahn, für den Transport von Gegenständen, z. B. Werkstückträgern, mit einer oder mehreren Stoppeinrichtungen zum Anhalten der Werkstückträger durch eine in die Förderbahn derselben bewegbare, elastische Stoppklinke, gekennzeichnet durch einen Gegenstopper (39) zum Arretieren des Werkstückträgers (10) nach Auftreffen desselben auf die Stoppklinke (21) gegen Rückbewegungen.

2.    Förderbahn nach Anspruch 1, dadurch gekennzeichnet, daß der Gegenstopper (39) unmittelbar beim Auftreffen des Werkstückträgers (10) auf die Stoppklinke (21) in die Förderbahn gegen eine Rückseite des Werkstückträgers (10) bzw. eines Anschlags (22) desselben bewegbar ist.

3. Förderbahn nach Anspruch 1 oder 2, dadurch gekennzeichnet, daß die Stoppklinke (21) durch den auftreffenden Werkstückträger (10) bewegbar und durch die Bewegung derselben der Gegenstopper (39) in seine Arretierposition bewegbar ist.

4. Förderbahn nach einem der Ansprüche 1 bis 3, dadurch gekennzeichnet, daß die Stoppklinke (21) infolge Auflaufens des Werkstückträgers (10) gegen ein elastisches Lager (Druckblock 25) bewegbar, insbesondere schwenkbar ist.

5. Förderbahn nach Anspruch 4, dadurch gekennzeichnet, daß die Stoppklinke (21) durch Schwenkbewegung gegen ein Gegendruckorgan, insbesondere gegen einen Druckblock aus elastisch verformbarem Material bewegbar ist.

6. Förderbahn nach einem oder mehreren der Ansprüche 1 bis 5, dadurch gekennzeichnet, daß die Stoppklinke (21) als zweiarmiger, insbesondere abgewinkelter Hebel ausgebildet ist, wobei ein Schenkel (23) desselben in Stoppstellung in die Bewegungsbahn des Werkstückträgers (10) bzw. eines Anschlags (22) desselben ragt und der andere, vorzugsweise horizontalgerichtete Schenkel (24) gegen den elastischen Druckblock (25) schwenkbar ist.

7. Förderbahn nach einem oder mehreren der Ansprüche 1 bis 6, dadurch gekennzeichnet, daß Stoppklinke (21) und/oder Gegenstopper (39) auf einem vorzugsweise gemeinsamen, bewegbaren Träger (26), vorzugsweise einem im Querschnitt U-förmigen Profil gelagert sind.

8. Förderbahn nach einem oder mehreren der Ansprüche 1 bis 7, dadurch gekennzeichnet, daß der Gegenstopper (39) als zweiarmiger, insbesondere abgewinkelter Hebel ausgebildet ist, wobei ein aufwärtsgerichteter Stoppschenkel (40) in die Bewegungsbahn des Werkstückträgers (10) bzw. des Anschlags (22) ragt und der andere Stoppschenkel (40) gegen einen elastischen Druckblock (25) schwenkbar ist.

9. Förderbahn nach einem oder mehreren der Ansprüche 1 bis 8, dadurch gekennzeichnet, daß der Gegenstopper (39) als ständig in die Bewegungsbahn des Werkstückträgers (10) bzw. des Anschlags (22) ragende, einseitig wirkende Raste ausgebildet ist.

10. Förderbahn nach Anspruch 9, dadurch gekennzeichnet, daß der aufwärtsgerichtete Stoppschenkel (40) des Gegenstoppers (39) mit einer in Transportrichtung des Werkstückträgers (10) ansteigenden Überlauffläche (44) versehen ist, derart, daß der Anschlag (22) od. dgl. über den Gegenstopper (39) unter Verschwenken desselben bis zur Anlage an der Stoppklinke (21) hinwegbewegbar ist.

11. Förderbahn nach einem oder mehreren der Ansprüche 1 bis 10, dadurch gekennzeichnet, daß die Stoppklinke (21) durch einen E-Motor (31) heb- und senkbar ist, wobei durch den E-Motor (31) ein Exzenter (Exzenterrolle 35) antreibbar ist, das in eine Ausnehmung (36) eines auf- und abbewegbaren, mit der Stoppklinke (21) bzw. dem Träger (26) verbundenen Hubbolzens (28) ragt.

12. Förderbahn nach Anspruch 11, dadurch gekennzeichnet, daß der gemeinsame Träger (26) für Stoppklinke (21) und Gegenstopper (39) quergerichtet auf dem oberen Ende des Hubbolzens (28) angeordnet ist.

13. Förderbahn nach Anspruch 11, dadurch gekennzeichnet, daß der Hubbolzen (28) in fest angeordneten Traghülsen (29) mit Gleitlagern (30) gelagert und geführt ist.

14. Förderbahn nach einem oder mehreren der Ansprüche 1 bis 13, dadurch gekennzeichnet, daß die Stoppklinke (21) und deren Antrieb sowie ein gegebenenfalls vorhandener Gegenstopper (39) an einer gemeinsamen Traverse (37) angebracht sind, die unterhalb der Friktionsrollenbahn (11) querliegend sich erstreckt und mit den Unterseiten von Schienen (12, 13) derselben verbunden ist.

15. Förderbahn nach einem oder mehreren der Ansprüche 1 bis 14, dadurch gekennzeichnet, daß die als schwenkbarer Hebel ausgebildete Stoppklinke (21) und/oder der ebenfalls als schwenkbarer Hebel ausgebildete Gegenstopper (39) ein elastisches Schwenklager (27) bzw. (43) aufweisen.

16. Förderbahn nach Anspruch 15, dadurch gekennzeichnet, daß die Stoppklinke (21) und/oder der Gegenstopper (39) durch einen Tragbolzen (48) gehalten sind, der elastisch abgestützt ist, insbesondere durch eine den Tragbolzen (48) umgebende Lagerbuchse 49 aus elastischem Werkstoff.

17. Förderbahn nach Anspruch 15 oder 16, dadurch gekennzeichnet, daß die Stoppklinke (21) und/oder der Gegenstopper (39) schwenkbar auf dem feststehenden, quergerichteten Tragbolzen (48) gelagert sind, wobei die Lagerbuchse (49) aus elastischem Werkstoff mit der Stoppklinke (21) bzw. dem Gegenstopper (39) verbunden und drehbar, vorzugsweise durch ein Gleitlager, auf dem Tragbolzen (48) abgestützt ist.

Fig. 1

TRANSPORTRICHTUNG

*Fig. 2*

2/4

0038871

Fig. 3

Fig. 4